# EUROPÄISCHE PATENTANMELDUNG

(11) **EP 1 380 277 A1**
(43) Veröffentlichungstag der Anmeldung: **14.01.2004**
(21) Anmeldenummer: 02028902.1
(22) Anmeldetag: 23.12.2002
(51) Int. Cl.: A61K 6/06, A61K 6/027

(54) **Modellmaterial für zahntechnische Zwecke sowie dessen Herstellung und Verwendung**

(30) Priorität: 12.07.2002 DE 10232135
(71) Anmelder: Wieland Dental + Technik GmbH & Co. KG, 75179 Pforzheim (DE)
(72) Erfinder: Winter, Volker, 76149 Karlsruhe (DE)
(74) Vertreter: Patentanwälte Ruff, Wilhelm, Beier, Dauster & Partner

(57) **Zusammenfassung**

Ein Modellmaterial für zahntechnische Zwecke enthält mindestens ein Metall und/oder mindestens eine Metallverbindung, welche durch eine chemische Reaktion miteinander und/oder mit einem weiteren Reaktionspartner unter Volumenexpansion umsetzbar sind, und mindestens einen Stoff mit thermoplastischen und/oder wachsartigen Eigenschaften. Gegebenenfalls kann zusätzlich eine Glaskeramik, ein Glas und/oder ein oxidkeramisches Material und ggf. ein Additiv, insbesondere ein Dispergierhilfsmittel, enthalten sein. Das Modellmaterial ist bei der Herstellung von keramischen Dentalformteilen in besonderer Weise zur Kompensation des dabei auftretenden Sinterschrumpfes geeignet.

## Beschreibung

Die Erfindung betrifft ein Modellmaterial für zahntechnische Zwecke, ein Verfahren zu seiner Herstellung sowie seine Verwendung.

Schon immer war Keramik oder "Porzellan" ein attraktiver Werkstoff, um Zähne mit sehr zahnähnlichem Aussehen in Form und Farbe nachzubilden. Keramik ist ein chemisch beständiger, korrosionsfester und biokompatibler Werkstoff, der zudem noch in fast unendlicher Menge in mineralischer Form verfügbar und somit preiswert ist. Aus diesem Werkstoff ist mit zahntechnischen Mitteln individueller Zahnersatz einfach und reproduzierbar herzustellen, so daß der Durchbruch des Werkstoffes "Dentalkeramik" eingetreten ist.

Um die einzige Schwäche dieses Werkstoffes, die Sprödigkeit, zu umgehen, wird zahntechnisch gefertigter Zahnersatz in der Regel schon seit langem als klassischer Werkstoff-Verbund hergestellt, z. B. als sogenannte Metallkeramik. Eine metallkeramische Krone oder Brücke besteht aus einem metallischen Gerüst bzw. Unterbau und einer der Zahnform nachempfundenen sogenannten Verblendung aus Dentalkeramik. Der Unterbau wird beim Einsetzen des Zahnersatzes direkt auf dem nach der zahnärztlichen Präparation verbleibenden Restzahn befestigt und wird oft als (Schutz-)Käppchen bezeichnet. Je nachdem, aus welchem Material bzw. aus welcher Legierung die Käppchen bestehen und je nach Herstellungsverfahren (Gießen, Galvanoforming-Verfahren, d. h. galvanische Abscheidung), können Probleme in Form von Korrosion und daraus resultierende Verfärbungen, Körperunverträglichkeiten u.a.m. entstehen. Deshalb wurden in den letzten Jahren zunehmend Systeme entwickelt, die vergleichbare Unterkonstruktionen aus keramischen Materialien herstellen und zahntechnisch weiterverarbeiten können.

Es gibt bereits mehrere funktionierende Systeme auf dem Dentalmarkt. So werden die Keramik-Käppchen beispielsweise durch manuelles Auftragen eines Schlickers auf einen Modellstumpf, anschließendem Sinterbrand sowie nachfolgender Infiltration mit Spezialglas (VITA In-Ceram) oder durch einen Preßvorgang unter Temperatureinwirkung (Empress, Fa. IVOCLAR) hergestellt. Es gibt auch Systeme, bei denen die Käppchen aus gesinterten oder vorgesinterten Keramikblöcken digital gefräst werden (DCS-System, CEREC usw.). Allen solchen sogenannten Vollkeramik-Systemen ist jedoch gemeinsam, daß sie die Paßgenauigkeit metallischer Körper auf dem Restzahn, ob letztere nun gegossen sind oder durch galvanische Prozesse entstehen, in der Regel nicht erreichen. Zudem sind diese Systeme in der Anschaffung meist sehr teuer.

Die mangelnde Paßgenauigkeit existierender Vollkeramik-Systeme ergibt sich hauptsächlich durch die verwendeten Formgebungsverfahren. Bei der Herstellung metallischer Käppchen wird gegossen oder galvanisiert, so daß sich das Metall in geschmolzener bzw. gelöster Form optimal der Stumpfgeometrie anpassen kann. Dagegen muß z. B. bei CADCAM-gestützten Vollkeramikverfahren nach einem digital aufgenommenen Datensatz aus festem Material spanabhebend gefräst werden. Das Scannen des Zahnstupfes und das Fräsen können aber, je nach der digitalen Auflösung der Systemkomponenten, bereits Ungenauigkeiten enthalten.

Eine weitere grundsätzliche Schwierigkeit bei allen existierenden oder zukünftigen Systemen zur Herstellung vollkeramischen Zahnersatzes aus gesinterten keramischen Werkstoffen hinsichtlich der Paßgenauigkeit der fertigen Teile ist der keramische Schrumpf, also die mit dem verdichtenden Sinterprozeß einhergehende Volumenschwindung keramischer Formteile. Dieser Sinterschrumpf läßt sich zwar innerhalb gewisser Grenzen reduzieren, aber nicht völlig vermeiden. Deshalb wird der mit dem Sinterschritt verbundene Sinterschrumpf beispielsweise indirekt dadurch vermieden, daß man bereits gesinterte Keramik (CADCAM-Verfahren, s. o.) verarbeitet oder versucht, auf andere Art und Weise ein porenfreies Feststoffgefüge zu erreichen (Glasinfiltration der weichen, porösen Keramik-Käppchen beim InCeram-Verfahren, s. o.). Auch bei der elektrophoretischen Abscheidung von Keramikpartikeln muß das erhaltene keramische Formteil anschließend gesintert werden, so daß sich auch hier das geschilderte Problem des Sinterschrumpfes zeigt.

In der DE-C1-197 03 032 und der DE-A1-100 44 605 sind Zusammensetzungen sogenannter Heißgießmassen und deren Verwendung zur Herstellung entsprechender Sinterkörper beschrieben. Dabei geht es in der erstgenannten Schrift jedoch um die Herstellung flächiger, einseitig strukturierter keramischer oder pulvermetallurgischer Bauteile, wie z. B. um Kühlelemente oder um Substrate für elektronische Bauelemente. Die DE-A1-100 44 605 erwähnt zwar die Herstellbarkeit von Zahnersatz mit den beanspruchten Formmassen, sie bezieht sich jedoch nicht auf die oben genannte Herstellung von keramischem Zahnersatz unter Verwendung von zahntechnischen Modellen (Stumpfmodellen).

In der DE-A1-4324438 wird ein Verfahren zur Herstellung oxidkeramischer Zahnersatzstücke beschrieben, bei dem durch Zugabe von Teilchen aus leicht oxidierbaren Metallen, Metallsuboxiden oder Metallhydriden der Sinterschrumpf direkt beim Sintern verhindert werden soll. Da dieses Verfahren jedoch ohne Verwendung von zahntechnischen Modellen (Stumpfmodellen) arbeitet, ist es nicht auf die oben beschriebenen Anwendungsfälle übertragbar. Entsprechendes gilt für die DE-C1-195 47 129. Auch dort soll der Sinterschrumpf des keramischen Sinterkörpers direkt beim Sintern verhindert werden.

Die Erfindung stellt sich deshalb die Aufgabe, dazu beizutragen, daß bei der Herstellung vollkeramischer Dentalformteile eine hohe Paßgenauigkeit mit den Grundstrukturen, für die sie vorgesehen sind, erreicht wird. Dabei sollen insbesondere die nachteiligen Effekte des geschilderten Sinterschrumpfes vermieden werden.

Diese Aufgabe wird gelöst durch das Modellmaterial mit den Merkmalen des Anspruchs 1, durch die Verfahren gemäß Anspruch 26 und Anspruch 28 sowie durch die Verwendung gemäß Anspruch 27. Bevorzugte Ausführungsformen sind in den abhängigen Ansprüchen 2 bis 25 bzw. 29 und 30 beschrieben. Der Wortlaut sämtlicher Ansprüche wird hiermit durch Bezugnahme zum Inhalt dieser Beschreibung gemacht.

Das erfindungsgemäße Modellmaterial für zahntechnische Zwecke enthält mindestens ein Metall und/oder mindestens eine Metallverbindung und mindestens einen Stoff mit thermoplastischen und/oder wachsartigen Eigenschaften. Das Metall und/oder die Metallverbindung sind dabei erfindungsgemäß durch eine chemische Reaktion miteinander und/oder durch eine chemische Reaktion mit mindestens einem weiteren Reaktionspartner unter Volumenvergrößerung umsetzbar. Vorzugsweise bilden dabei das Metall und/oder die Metallverbindung innerhalb des Materials eine erste Komponente und der thermoplastische/wachsartige Stoff eine zweite Komponente.

Das beschriebene Modellmaterial hat den Vorteil, daß es (aufgrund der Durchführbarkeit der chemischen Reaktion) expandierbar ist. Diese Expandierbarkeit ist dabei, wie später noch näher erläutert wird, innerhalb weiter Grenzen einstellbar. Damit kann der bei der eigentlichen Herstellung des keramischen Dentalformteils auftretende Sinterschrumpf bereits bei der Herstellung des zahntechnischen Modells (beispielsweise Arbeitsmodells) berücksichtigt werden. Zu diesem Zweck wird die Expandierbarkeit des Modellmaterials entsprechend dem (bekannten) Sinterschrumpf des zur Herstellung des Zahnersatzes verwendeten Keramikmaterials definiert und eingestellt. Auf diese Weise lassen sich Dentalformteile herstellen, die exakt auf die Mundpräparation (z. B. Zahnstumpf) oder auf prothetische Aufbauteile passen.

Grundsätzlich kann die Zusammensetzung des erfindungsgemäßen Materials frei gewählt werden, solange durch eine beliebige chemische Reaktion eine entsprechende Volumenvergrößerung möglich ist. Vorzugsweise ist die Zusammensetzung aber so gewählt, daß die Durchführung einer chemischen Reaktion möglich ist, bei der eine Erhöhung der Oxidationszahl des Metall oder des Metalls der Metallverbindung eintritt. Eine solche Erhöhung der Oxidationszahl stellt bekanntermaßen eine Definitionsmöglichkeit für den Begriff "Oxidation" dar. Sie schließt deshalb nicht nur die Umsetzung mit Sauerstoff, also eine Oxidation im engeren Sinne, ein, sondern beispielsweise auch eine Nitridierung.

Bei weiter bevorzugten Ausführungsformen des erfindungsgemäßen Modellmaterials ist dessen Zusammensetzung so gewählt, daß eine chemische Reaktion mit einer sauerstoffhaltigen Verbindung als Reaktionspartner oder vorzugsweise mit Sauerstoff als Reaktionspartner möglich ist. Eine derartige chemische Reaktion kann deshalb in einfacher Weise durch Umsetzung mit Luftsauerstoff erfolgen. Die chemische Reaktion entspricht dann genau dem oben genannten "klassischen" Begriff der Oxidation.

Bei dem Metall oder dem Metall der Metallverbindung kann es sich erfindungsgemäß vorzugsweise um ein sogenanntes Übergangsmetall handeln. Innerhalb dieser Gruppe sind insbesondere die Übergangsmetalle der vierten Nebengruppe zu nennen, wobei Titan besonders bevorzugt ist.

Bei weiter bevorzugten Ausführungsformen des erfindungsgemäßen Modellmaterials handelt es sich bei der Metallverbindung um die Verbindung eines Metalls mit (mindestens einem) Nichtmetall. In solchen Fällen enthält das Modellmaterial also keine intermetallischen Verbindungen, d. h. keine chemischen Verbindungen aus zwei oder mehr metallischen Elementen. Vorzugsweise enthält das Modellmaterial in solchen Fällen als Metallverbindungen Nitride, Carbide oder Boride, wobei die Verwendung von Nitriden bevorzugt ist. Die genannten Verbindungen sind unter anderem deshalb bevorzugt, da sie mit Sauerstoff/Luftsauerstoff häufig leicht unter Volumenexpansion chemisch umsetzbar sind.

Erfindungsgemäß sind grundsätzlich alle Stoffe mit thermoplastischen und/oder wachsartigen Eigenschaften einsetzbar. Die Definition derartiger Stoffe ist dem Fachmann bekannt, wobei zusätzlich beispielsweise auf die Definitionen im Römpp-Lexikon, Georg Thieme Verlag, verwiesen werden kann. Diese Stoffe dienen erfindungsgemäß zur Bereitstellung der Verarbeitbarkeit und Formbarkeit der im Regelfall in Pulverform vorliegenden Metalle/Metallverbindungen. Vorzugsweise handelt es sich bei den entsprechenden Stoffen um Wachse, wobei das erfindungsgemäße Modellmaterial insbesondere mindestens ein Paraffinwachs enthält.
Je nach Zusammensetzung kann das erfindungsgemäße Modellmaterial bei ganz unterschiedlichen Temperaturen fest werden. Aufgrund der geschilderten Verwendung dieser Modellmaterialien ist es aber bevorzugt, wenn das Material einen Erstarrungspunkt zwischen 50°C und 80°C, insbesondere zwischen 55°C und 70°C, aufweist. Daraus resultierende Vorteile werden später im Zusammenhang mit der bevorzugten Lagerform des Modellmaterials noch angesprochen.

Weiter kann die Konsistenz und in diesem Zusammenhang die Viskosität des Modellmaterials im Hinblick auf seine Verwendung eingestellt sein. Da in der Regel Negativformen einer Zahnpräparation oder eines prothetischen Aufbauteils mit dem Modellmaterial befüllt werden, sollte das Modellmaterial eine Fließgrenze aufweisen und oberhalb des Erstarrungspunktes eine vergleichsweise geringe Viskosität haben. Oberhalb des Erstarrungspunktes und oberhalb der Fließgrenze kann es gut und schnell in die entsprechenden Formen fließen. Nach Abkühlung auf Temperaturen deutlich unterhalb des Erstarrungspunktes ist das Modellmaterial fest genug, um ausgeformt (d.h. aus dem Modell entfernt) zu werden ohne sich dabei zu verformen. Beim erneutem Erwärmen des ausgeformten Modellmaterials oberhalb des Erstarrungspunktes aber ohne Überwindung der Fließgrenze bleibt seine Form erhalten. Idealerweise ist die Fließgrenze aber nicht zu hoch, damit sie vom Anwender des Materials, d. h. in der Regel einem Zahntechniker, durch einfache Maßnahmen wie Rühren mit einem Spatel oder Verwendung eines Vibrators, überwunden werden kann.

Bei weiteren bevorzugten Ausführungsformen enthält das erfindungsgemäße Modellmaterial zusätzlich mindestens eine Glaskeramik, ein Glas und/oder ein oxidkeramisches Material. Bekanntlich handelt es sich bei Glas ganz allgemein um Stoffe im amorphen, nicht kristallinen Festzustand, der physikalisch als eingefrorene, unterkühlte Schmelze beschrieben werden kann. Glaskeramiken sind polykristalline Festkörper, die durch kontrollierte Kristallisation (Entglasung) von Gläsern hergestellt werden. Glaskeramiken zeigen im Gefüge neben den kristallinen Phasen noch glasartige, amorphe Phasen. Oxidkeramische Materialien sind keramische Werkstoffe aus (hochfeuerfesten) Oxiden, die auch aus mehreren Oxiden aufgebaut sein können. Sie besitzen ein glasphasenfreies Gefüge. Die genannten Materialien werden erfindungsgemäß insbesondere als Bestandteil der eingangs definierten ersten Komponente eingesetzt. Sie sind in der Regel für die zur Volumenvergrößerung dienende chemische Reaktion inert, d. h. sie reduzieren die Expandierbarkeit des Modellmaterials, wenn sie diesem zugesetzt werden. Vorzugsweise handelt es sich bei den genannten Materialien um eine von Silicatglas abgeleitete Glaskeramik, um Silicatglas oder um eine Aluminiumoxid-Keramik. Diese Materialien stehen in großen Mengen preisgünstig zur Verfügung.

Bei weiteren bevorzugten Ausführungsformen der Erfindung enthält das Modellmaterial zusätzlich mindestens ein Additiv, wobei hier insbesondere sogenannte Dispergierhilfsmittel zum Einsatz kommen. Diese fördern die Durchmischung von Metall/Metallverbindung auf der einen Seite und dem thermoplastischen/wachsartigen Stoff auf der anderen Seite.

Derartige Additive und Dispergierhilfsmittel sind dem Fachmann grundsätzlich bekannt. Bevorzugt zu nennen sind hier die Polyethylenglykole, wobei hier insbesondere die Polyethylenglykolether hervorzuheben sind. Als Beispiel sind hier die unter der Marke Brij vertriebenen Produkte der Firma Fluka, Deutschland, zu nennen.

Wie eingangs erwähnt ist die Zusammensetzung des Modellmaterials erfindungsgemäß innerhalb weiter Grenzen einstellbar. Im folgenden sollen jedoch Zusammensetzungen definiert werden, bei denen der erfindungsgemäße Erfolg in besonderer Weise eintritt.

So sind Ausführungsformen hervorzuheben, bei denen der Anteil der ersten Komponente (Metall/Metallverbindung und gegebenenfalls Glaskeramik, Glas und/oder Oxidkeramik), bezogen auf das Gesamtvolumen des Materials, zwischen 30 Vol.-% und 80 Vol.-% beträgt. Innerhalb dieses Bereichs sind Anteile zwischen 50 Vol.-% und 75 Vol.-% weiter bevorzugt.

Ebenfalls bevorzugt sind Ausführungsformen, bei denen die im Modellmaterial enthaltene erste Komponente, bezogen auf das Gesamtvolumen dieser ersten Komponente, aus 1 Vol.-% bis 100 Vol.-% Titannitrid und 0 Vol.-% bis 99 Vol.-% Glaskeramik, Glas und/oder Oxidkeramik besteht. Innerhalb dieser Bereiche sind Ausführungsformen als bevorzugt zu nennen, bei denen zum einen die erste Komponente 3 Vol.-% bis 25 Vol.-% Titannitrid und dementsprechend 75 Vol.-% bis 97 Vol.-% Aluminiumoxid bzw. zum anderen 40 Vol.-% bis 99 Vol.-% Titannitrid und dementsprechend 1 Vol.-% bis 60 Vol.-% Glaskeramik oder Glas enthält.

Weiter zu nennen sind bevorzugte Korngrößen der Metallverbindung bzw. der zugesetzten Materialien. So beträgt die bevorzugte Korngröße d₅₀ der Metallverbindung, insbesondere des Titannitrids, 0,5 µm bis 8 µm. Innerhalb dieses Bereichs liegen weiter bevorzugte Korngrößen d₅₀ zwischen 0,5 und 1,5 µm oder zwischen 2 und 8 µm. Die bevorzugte Korngröße d₅₀ des oxidkeramischen Materials, insbesondere des Aluminiumoxids, beträgt 3 bis 5 µm, insbesondere 3,5 bis 4 µm. Die bevorzugte Korngröße d₉₀ des Glases oder der Glaskeramik beträgt weniger als 80 µm, insbesondere weniger als 30 µm.

Spezifiziert man eine erste Gruppe weiter bevorzugter Ausführungsformen, so sind Modellmaterialien hervorzuheben, bei denen die erste Komponente, bezogen auf das Gesamtvolumen dieser ersten Komponente, zum einen aus 1 Vol.-% bis 12 Vol.-% Titannitrid, insbesondere 3 Vol.-% bis 12 Vol.-% Titannitrid, mit einer Körngröße d₅₀ von 2 bis 8 µm und 88 Vol.-% bis 99 Vol.-% Aluminiumoxid, vorzugsweise 88 Vol.-% bis 97 Vol.-% Aluminiumoxid, mit einer Korngröße d₅₀ von 3 bis 5 um und zum anderen aus 40 Vol.-% bis 60 Vol.-% Titannitrid mit einer Körngröße d₅₀ von 2 bis 8 um und 40 Vol.-% bis 60 Vol.-% Glas oder Glaskeramik mit einer Korngröße d₉₀ von weniger als 30 µm besteht.

Spezifiziert man eine zweite Gruppe weiter bevorzugter Ausführungsformen, so sind Modellmaterialien hervorzuheben, bei denen die erste Komponente, bezogen auf das Gesamtvolumen dieser ersten Komponente, zum einen aus 10 Vol.-% bis 25 Vol.-% Titannitrid mit einer Korngröße d₅₀ von 0,5 bis 1,5 µm und 75 Vol.-% bis 90 Vol.-% Aluminiumoxid mit einer Korngröße d₅₀ von 3 bis 5 µm und zum anderen aus 70 Vol.-% bis 95 Vol.-% Titannitrid mit einer Korngröße d₅₀ von 0,5 bis 1,5 µm und 5 Vol.-% bis 30 Vol.-% Glas oder Glaskeramik mit einer Korngröße d₉₀ von weniger als 30 µm besteht.

Betrachtet man die Zusammensetzung des erfindungsgemäßen Modellmaterials im Hinblick auf das zugesetzte Additiv, so lassen sich dessen Mengen auf die (gesamte) Partikeloberfläche von Metall/Metallverbindung und gegebenenfalls von Glaskeramik, Glas und/oder Oxidkeramik beziehen. Hier sind Mengen an Additiv von ca. 0,5 bis 10 mg, vorzugsweise 1 bis 4 mg, pro m² Partikeloberfläche zu nennen.

Wie bereits geschildert läßt sich die Expandierbarkeit des erfindungsgemäßen Modellmaterials durch Wahl der Zusammensetzung innerhalb weiter Grenzen variieren. Im Regelfall wird man zur Kompensation eines üblicherweise auftretenden Sinterschrumpfs eine lineare Expandierbarkeit des Materials zwischen 3 und 50 %, insbesondere zwischen 5 und 30 % einstellen. Innerhalb dieser Bereiche sind Werte für die lineare Expandierbarkeit zwischen 10 % und 25 % bevorzugt, zur Kompensation üblicher Sinterschrumpfe von Dentalkeramiken. Wie bereits erwähnt läßt sich die durch die Umsetzung des Metalls/der Metallverbindung eintretende Expansion durch Zugabe der genannten Materialien reduzieren und damit einstellen. Letztere verhalten sich bei der Umsetzung inert und expandieren nicht. So beträgt beispielsweise die (berechnete) lineare Expansion von Titannitrid (TiN) bei der Oxidation zu Titandioxid (TiO₂) 18,1 %, die sich durch Beimengung von Glaskeramik, Glas und/oder oxidkeramischen Materialien reduzieren läßt.

In diesem Zusammenhang läßt sich ein weiterer bei dem erfindungsgemäßen Modellmaterial auftretender Effekt nutzen. So expandiert Titannitrid bei der Umsetzung zu Titandioxid nicht nur um den oben angegebenen Wert, sondern in viel stärkerem Maße. Dies ist darauf zurückzuführen, daß nicht nur die oben angegebene chemische Reaktion stattfindet, sondern daß sich zusätzlich die Porosität des Materials erhöht. Durch diese _{"}Überexpansion" läßt sich ein erfindungsgemäßes Modellmaterial mit einer Expandierbarkeit von beispielsweise 30 % oder sogar darüber bereitstellen. Eine Reduzierung der Expansion ist durch Beimischung vorzugsweise größerer Mengen der genannten (inerten) Materialien möglich. Damit lassen sich beispielsweise die bevorzugten Werte für die lineare Expandierbarkeit zwischen 10 und 25 % einstellen. Die Möglichkeit, zur Reduzierung der Volumenexpansion größere Mengen an Glaskeramik, Glas und/oder oxidkeramischem Material beizumischen, hat den Vorteil, daß zahntechnische Modelle mit hohen Festigkeitswerten erhalten werden können. Außerdem läßt sich das Gefüge bei dem zahntechnischen Modell einstellen. Die verbliebene (offene) Porosität des mit dem erfindungsgemäßen Modellmaterial hergestellten zahntechnischen Modells hat darüber hinaus den Vorteil, daß sie für die Zufuhr von Gasen oder Flüssigkeiten oder deren Abfuhr (z. B. bei der Trocknung) genutzt werden kann.

Das erfindungsgemäße Modellmaterial ist, insbesondere unterhalb seines Erstarrungspunktes, d. h. im erstarrten Zustand, sehr lange lagerfähig, da keine Entmischung der Komponenten stattfinden kann. Vorzugsweise wird das Modellmaterial in Form von Granalien, insbesondere in Form von weitgehend tropfenförmigen Granalien, bereitgestellt. Auf diese Weise läßt sich das Material, insbesondere für seine bestimmungsgemäße Verwendung, auf einfache Weise dosieren, beispielsweise auch abwiegen. Um hier die entsprechenden üblichen Wägegenauigkeiten zu ermöglichen, beträgt der Durchmesser der genannten Granalien vorzugsweise zwischen 2 und 20 mm, insbesondere zwischen 5 und 15 mm. Schließlich sei in diesem Zusammenhang noch erwähnt, daß das erfindungsgemäße Modellmaterial in einer verschließbaren, vorzugsweise einer luftdicht verschließbaren, Verpackung oder einem entsprechenden Behältnis vorliegen kann.

Weiter betrifft die Erfindung ein Verfahren zur Herstellung des erfindungsgemäßen Modellmaterials. Dabei wird eine erste Komponente aus mindestens einem Metall und/oder mindestens einer Metallverbindung, welche durch chemische Reaktion miteinander und/oder mit mindestens einem weiteren Reaktionspartner unter Volumenvergrößerung umsetzbar sind, gegebenenfalls nach Zumischung mindestens einer Glaskeramik, eines Glases und/oder eines oxidkeramischen Materials, mit einer zweiten Komponente aus mindestens einem Stoff mit thermoplastischen und/oder wachsartigen Eigenschaften, gegebenenfalls nach Zumischung mindestens eines Additivs, dispergiert. Die beschriebene Vorgehensweise hat den Vorteil, daß durch den Einsatz der beiden Komponenten eine möglichst gute Wechselwirkung der Bestandteile des Materials erreicht wird. In diesem Zusammenhang wird auf die später noch erläuterten Beispiele verwiesen, in denen diese Vorgehensweise noch detaillierter beschrieben ist.

Darüber hinaus umfaßt die Erfindung die Verwendung des erfindungsgemäßen Modellmaterials zur Herstellung von Dentalformteilen. Insbesondere handelt es sich hier um vollkeramische Dentalformteile, d. h. um solche, bei denen das Formteil vollständig aus Keramikmaterial aufgebaut ist. Bei dieser erfindungsgemäßen Verwendung wird der Sinterschrumpf, der beim Sintern eines auf einem Arbeitsmodell gebildeten keramischen Grünkörpers eintritt, durch die Expansion des Modellmaterials (bei der Herstellung des Arbeitsmodells) mindestens teilweise kompensiert. Vorzugsweise erfolgt eine vollständige Kompensation des Sinterschrumpfs, so daß das nach dem Sintern bereitgestellte Dentalformteil von seinen Abmessungen her exakt der Mundpräparation bzw. einem prothetischen Aufbauteil entspricht.

Schließlich umfaßt die Erfindung ein Verfahren zur Herstellung eines zahntechnischen Modells. Bei diesem Verfahren wird das erfindungsgemäße Modellmaterial in eine Negativform einer Zahnpräparation oder eines prothetischen Aufbauteils eingebracht und daran anschließend eine chemische Reaktion unter Volumenvergrößerung des Materials initiiert und durchgeführt.

In Übereinstimmung mit den oben gemachten Ausführungen zum Modellmaterial selbst ist das erfindungsgemäße Verfahren weiter dadurch gekennzeichnet, daß es sich bei der chemischen Reaktion um eine Oxidation handelt, vorzugsweise um eine Oxidation mit Sauerstoff (oder insbesondere Luftsauerstoff) als Reaktionspartner.

Bei allen genannten Ausführungsformen des erfindungsgemäßen Verfahrens wird die chemische Reaktion vorzugsweise durch eine thermische Behandlung initiiert und durchgeführt. Grundsätzlich können Temperaturen innerhalb eines breiten Temperaturbereichs angewendet werden, wobei eine thermische Behandlung bei Temperaturen zwischen 200°C und 1.250°C bevorzugt ist. Dies betrifft beispielsweise und insbesondere die Fälle, bei denen eine Oxidation des Modellmaterials an Luft, d. h. mit Luftsauerstoff, durchgeführt wird.

Die beschriebenen Merkmale und weitere Merkmale der Erfindung ergeben sich aus der nachfolgenden Beschreibung der Beispiele in Verbindung mit den Unteransprüchen. Hierbei können die einzelnen Merkmale jeweils für sich allein oder in Kombination miteinander verwirklicht sein.

### Beispiel 1

Es werden 104,24 g Aluminiumoxid (Korngröße d₅₀ = 3,8 µm) und 15,76 g Titannitrid (Korngröße d₅₀ = 6,4 µm) in einer Planetenmühle für ca. 4 h mischgemahlen (Komponente 1). Die entspricht einem Volumenverhältnis von 90 % Aluminiumoxid zu 10 % Titannitrid. Als Dispersionsmedium beim Mahlen wird Ethanol verwendet und Mahlbecher und Kugeln aus Aluminiumoxid. Die Mischung wird anschließend bei 80 - 100°C getrocknet. In einem auf 85°C temperierten Gefäß werden 16,63 g Paraffin (Erstarrungspunkt 62 - 64°C und 0,79 g Brij 72 ® erschmolzen (Komponente 2). Hierzu wird unter Rühren die ebenfalls temperierte Pulvermischung (Komponente 1) langsam zugegeben. Zum Rühren wird eine Dissolvscheibe mit 50 mm Durchmesser verwendet und bei ca. 2.000 U/min für 1 h dispergiert. Danach entsteht eine homogene, pastöse Masse, die sofort zur Abformung verwendet werden kann. Die Masse kann in erstarrtem Zustand gelagert werden, wozu sie in tropfenförmigen Granalien mit 5 - 15 mm Durchmesser portioniert wird. Vor einer Wiederverwendung muß die gewünschte Menge dosiert, auf 80°C erwärmt und durch Rühren redispergiert werden.

Die Formen bestehen aus einem Silikonkautschuk, die vor der Befüllung mit der hier beschriebenen Masse auf ca. 80°C erwärmt wurden. Zur Befüllung werden die Formen auf einen Vibrator gestellt und die fließfähige Masse in die Form gefüllt, wobei das Einschließen von Luft zu vermeiden ist. Durch das Vibrieren wird die Formfüllung und ein Ausgasen der Masse erleichtert. Nach dem Erkalten wird der aus erfindungsgemäßer Masse bestehende Formkörper ausgeformt.

Dieses Formteil wird in einem Pulverbett aus Aluminiumoxid eingebettet und in einem geeigneten Ofen entwachst und oxidiert. Dabei wird folgendes Temperaturprofil verwendet:

Von Zimmertemperatur mit 0,5 K/min auf 200°C erhitzen und 2 h halten, mit 0,5 K/min auf 350°C erhitzen und 1 h halten, mit 2 K/min auf 1.200°C erhitzen und 2 h halten, abkühlen lassen. Die erzielte lineare Expansion beträgt 18%.

### Beispiel 2

Es werden 89,54 g Aluminiumoxid (Korngröße d₅₀ = 3,8 µm) und 30,46 g Titannitrid (Korngröße d₅₀ = 1,2 µm) in einer Planetenmühle für ca. 4 h mischgemahlen (Komponente 1). Dies entspricht einem Volumenverhältnis von 80 % Aluminiumoxid zu 20 % Titannitrid. Als Dispersionsmedium beim Mahlen wird Ethanol verwendet und Mahlbecher und Kugeln aus Aluminiumoxid. Die Mischung wird anschließend bei 80 - 100°C getrocknet. In einem auf 85°C temperierten Gefäß werden 16,09 g Paraffin (Erstarrungspunkt 62 - 64°C) und 0,74 g Brij 72 ® erschmolzen (Komponente 2). Hierzu wird unter Rühren die ebenfalls temperierte Pulvermischung (Komponente 1) langsam zugegeben. Zum Rühren wird eine Dissolverscheibe mit 50 mm Durchmesser verwendet und bei ca. 2.000 U/min für 1 Stunde dispergiert. Danach entsteht eine homogene, pastöse Masse, die sofort zur Abformung verwendet werden kann. Die Masse kann im erstarrten Zustand gelagert werden, wozu sie in tropfenförmigen Granalien mit 5 - 15 mm Durchmesser portioniert wird. Vor einer Wiederverwendung muß die gewünschte Menge dosiert, auf 80°C erwärmt und durch Rühren redispergiert werden.

Die Formen bestehen aus einem Silikonkautschuk, die vor der Befüllung mit der hier beschriebenen Masse auf ca. 80°C erwärmt wurden. Zur Befüllung werden die Formen auf einen Vibrator gestellt und die fließfähige Masse in die Form gefüllt, wobei das Einschließen von Luft zu vermeiden ist. Durch das Vibrieren wird die Formfüllung und ein Ausgasen der Masse erleichtert. Nach dem Erkalten wird der aus erfindungsgemäßer Masse bestehende Formkörper ausgeformt.

Dieses Formteil wird in einem Pulverbett aus Aluminiumoxid eingebettet und in einem geeigneten Ofen entwachst und oxidiert. Dabei wird folgendes Temperaturprofil verwendet:

Von Zimmertemperatur mit 0,5 K/min auf 200°C erhitzen und 2 Stunden halten, von 0,5 K/min auf 350°C erhitzen und 1 Stunde halten, mit 2 K/min auf 1.200°C erhitzen und 2 Stunden halten, abkühlen lassen. Die erzielte lineare Expansion beträgt 11,5 %.

### Beispiel 3

Es werden 134,52 g Glaskeramikpulver (Zusammensetzung in Masse-%: 57,8 SiO₂, 13,8 Al₂O₃, 10,4 Na₂O, 8,7 K₂O, 4,3 CaO, 1,9SnO₂, 1,7 ZnO₂, 0,6 B₂O₃, 0,2 ZrO₂; Glastransformationspunkt: 550°C, Erweichungspunkt: 620°C, WAK: 12,710⁻⁶; Leucit-Anteil: 20-30 %; Korngröße: d₉₀ ≤ 10µm) und 15,48 g Titannitrid (Korngröße: d₅₀=1,2 um) in ca. 100 ml Ethanol gegeben und die Suspension mittels Ultraschalldesintegrator dispergiert. Anschließend wird Ethanol vollständig abgezogen. Diese Pulvermischung (Komponente 1) hat ein Volumenverhältnis von 80 Vol.-% Glaskeramik zu 20 Vol.-% Titannitrid. In einem auf 85 °C temperierten Gefäß werden 15,08 g Paraffin (Erstarrungspunkt 62 - 64 °C) und 2 g Brij 72 ® erschmolzen (Komponente 2). Hierzu wird unter Rühren die ebenfalls temperierte Pulvermischung (Komponente 1) langsam zugegeben. Zum Rühren wird ein Propellerrührer mit 50 mm Durchmesser verwendet und bei ca. 500 U/min eingerührt und anschließend bei ca. 1000 U/min für 1 Stunde dispergiert. Danach entsteht eine homogene, pastöse Masse, die durch Anlegen eines Unterdrucks (< 10 mbar) entgast wird und anschließend zur Abformung verwendet werden kann. Die Masse kann im erstarrten Zustand gelagert werden, wozu sie in tropfenförmigen Granalien mit 5-15 mm Durchmesser portioniert wird. Vor einer Wiederverwendung muß die gewünschte Menge dosiert, auf 85 °C erwärmt und durch Rühren redispergiert werden.

Die Formen bestehen aus einem Silikonkautschuk, die vor der Befüllung mit der hier beschriebenen Masse auf ca. 85 °C erwärmt wurden. Zur Befüllung werden die Formen auf einen Vibrator gestellt und die fließfähige Masse in die Formen gefüllt. Die gefüllten Formen werden anschließend evakuiert. Durch das Vibrieren und Evakuieren wird die Formfüllung und ein Ausgasen der Masse erleichtert. Nach dem Erkalten wird der aus erfindungsgemäßer Masse bestehende Formkörper ausgeformt.

Diese Formteile werden in einem Pulverbett aus Aluminiumoxid eingebettet und in einem geeigneten Ofen entwachst und oxidiert. Dabei wird folgendes Temperaturprofil verwendet:

Von Zimmertemperatur erhitzen mit 1 K/min auf 100 °C, weiter mit 2 K/min auf 400 °C, mit 0,5 K/min auf 420 °C, mit 0,4 K/min auf 550 °C und mit 4 K/min auf Endtemperatur von 750 °C, die für 30 min gehalten wird.

## Patentansprüche

1. Modellmaterial für zahntechnische Zwecke, **dadurch gekennzeichnet, daß** es, vorzugsweise als erste Komponente, mindestens ein Metall und/oder mindestens eine Metallverbindung, welche durch chemische Reaktion miteinander und/oder mit mindestens einem weiteren Reaktionspartner unter Volumenvergrößerung umsetzbar sind und, vorzugsweise als zweite Komponente, mindestens einen Stoff mit thermoplastischen und/oder wachsartigen Eigenschaften, enthält.

2. Modellmaterial nach Anspruch 1, **dadurch gekennzeichnet, daß** bei der chemischen Reaktion eine Erhöhung der Oxidationszahl des Metalls oder des Metalls der Metallverbindung eintritt.

3. Modellmaterial nach Anspruch 1 oder Anspruch 2, **dadurch gekennzeichnet, daß** es sich bei dem Reaktionspartner um eine sauerstoffhaltige Verbindung oder vorzugsweise um Sauerstoff handelt.

4. Modellmaterial nach einem der vorhergehenden Ansprüche, **dadurch gekennzeichnet, daß** es sich bei dem Metall oder dem Metall der Metallverbindung um ein sogenanntes Übergangsmetall handelt.

5. Modellmaterial nach Anspruch 4, **dadurch gekennzeichnet, daß** es sich bei dem Metall oder dem Metall der Metallverbindung um ein Übergangsmetall der vierten Nebengruppe, insbesondere um Titan, handelt.

6. Modellmaterial nach einem der vorhergehenden Ansprüche, **dadurch gekennzeichnet, daß** es sich bei der Metallverbindung um die Verbindung eines Metalls mit einem Nichtmetall, vorzugsweise um ein Nitrid, ein Carbid oder ein Borid, insbesondere um ein Nitrid, handelt.

7. Modellmaterial nach einem der vorhergehenden Ansprüche, **dadurch gekennzeichnet, daß** es sich bei dem Stoff um ein Wachs, vorzugsweise um mindestens ein Paraffinwachs, handelt.

8. Modellmaterial nach einem der vorhergehenden Ansprüche, **dadurch gekennzeichnet, daß** es einen Erstarrungspunkt zwischen 50°C und 80°C, vorzugsweise zwischen 55°C und 70°C, aufweist.

9. Modellmaterial nach einem der vorhergehenden Ansprüche, **dadurch gekennzeichnet, daß** es zusätzlich, vorzugsweise als Bestandteil der ersten Komponente, mindestens ein Glas und/oder eine Glaskeramik enthält.

10. Modellmaterial nach Anspruch 9, **dadurch gekennzeichnet, daß** es sich bei dem Glas um ein Silicatglas handelt oder die Glaskeramik von Silicatglas abgeleitet ist.

11. Modellmaterial nach einem der vorhergehenden Ansprüche, **dadurch gekennzeichnet, daß** es zusätzlich, vorzugsweise als Bestandteil der ersten Komponente, mindestens ein oxidkeramisches Material enthält.

12. Modellmaterial nach Anspruch 11, **dadurch gekennzeichnet, daß** es sich bei dem oxidkeramischen Material um Aluminiumoxid handelt.

13. Modellmaterial nach einem der vorhergehenden Ansprüche, **dadurch gekennzeichnet, daß** es zusätzlich mindestens ein Additiv, insbesondere mindestens ein Dispergierhilfsmittel, enthält.

14. Modellmaterial nach Anspruch 13, **dadurch gekennzeichnet, daß** es sich bei dem Additiv um mindestens ein Polyethylenglykol, vorzugsweise mindestens einen Polyethylenglykolether, handelt.

15. Modellmaterial nach einem der vorhergehenden Ansprüche, **dadurch gekennzeichnet, daß** der Anteil der ersten Komponente, bezogen auf das Gesamtvolumen des Materials, zwischen 30 Vol.-% und 80 Vol.-%, vorzugsweise zwischen 50 Vol.-% und 75 Vol.-%. beträgt.

16. Modellmaterial nach einem der vorhergehenden Ansprüche, **dadurch gekennzeichnet, daß** die im Modellmaterial enthaltene erste Komponente, bezogen auf das Gesamtvolumen dieser ersten Komponente, entweder aus 1 Vol.-% bis 100 Vol.-% Titannitrid, vorzugsweise aus 3 Vol.-% bis 25 Vol.-% Titannitrid, und 0 Vol.-% bis 99 Vol.-% oxidkeramischem Material, insbesondere Aluminiumoxid, vorzugsweise 75 Vol.-% bis 97 Vol.-% oxidkeramischem Material, insbesondere Aluminiumoxid besteht oder aus 1 Vol.-% bis 100 Vol.-% Titannitrid, vorzugsweise 40 Vol.-% bis 99 Vol.-% Titannitrid, und 0 Vol.-% bis 99 Vol.-% Glas oder Glaskeramik, vorzugsweise 1 Vol.-% bis 60 Vol.-% Glas oder Glaskeramik besteht.

17. Modellmaterial nach einem der vorhergehenden Ansprüche, insbesondere nach Anspruch 16, **dadurch gekennzeichnet, daß** die Korngröße d₅₀ der Metallverbindung, insbesondere des Titannitrids, 0,5 µm bis 8 µm beträgt, vorzugsweise zwischen 0,5 und 1,5 µm oder zwischen 2 und 8 µm.

18. Modellmaterial nach einem der Ansprüche 9 bis 17, insbesondere nach Anspruch 16 oder Anspruch 17, **dadurch gekennzeichnet, daß** die Korngröße d₅₀ des oxidkeramischen Materials, insbesondere des Aluminiumoxids, 3 bis 5 µm, vorzugsweise 3,5 bis 4 µm, beträgt oder die Korngröße d₉₀ des Glases oder der Glaskeramik weniger als 80 µm, vorzugsweise weniger als 30 µm, beträgt.

19. Modellmaterial nach einem der vorhergehenden Ansprüche, **dadurch gekennzeichnet, daß** die im Modellmaterial enthaltene erste Komponente, bezogen auf das Gesamtvolumen dieser ersten Komponente, entweder aus 1 Vol.-% bis 12 Vol.-% Titannitrid, vorzugsweise 3 Vol.-% bis 12 Vol.-% Titannitrid, mit einer Korngröße d₅₀ von 2 bis 8 µm, und 88 Vol.-% bis 99 Vol.-% Aluminiumoxid, vorzugsweise 88 Vol.-% bis 97 Vol.-% Aluminiumoxid, mit einer Korngröße d₅₀ von 3 bis 5 µm besteht oder aus 40 Vol.-% bis 60 Vol.-% Titannitrid mit einer Korngröße d₅₀ von 2 bis 8 µm, und 40 Vol.-% bis 60 Vol.-% Glas oder Glaskeramik mit einer Korngröße d₉₀ von weniger als 80 µm, vorzugsweise weniger als 30 µm besteht.

20. Modellmaterial nach einem der vorhergehenden Ansprüche, **dadurch gekennzeichnet, daß** die im Modellmaterial enthaltene erste Komponente, bezogen auf das Gesamtvolumen dieser ersten Komponente, entweder aus 10 Vol.-% bis 25 Vol.-% Titannitrid mit einer Korngröße d₅₀ von 0,5 bis 1,5 µm und 75 Vol.-% bis 90 Vol.-% Aluminiumoxid mit einer Korngröße d₅₀ von 3 bis 5 µm besteht oder aus 70 Vol.-% bis 95 Vol.-% Titannitrid mit einer Korngröße d₅₀ von 0,5 bis 1,5 µm und 5 Vol.-% bis 30 Vol.-% Glas oder Glaskeramik mit einer Korngröße d₉₀ von weniger als 80 um, vorzugsweise weniger als 30 µm besteht.

21. Modellmaterial nach einem der Ansprüche 13 bis 20, **dadurch gekennzeichnet, daß** das Additiv, bezogen auf die Partikeloberfläche von Metall und/oder Metallverbindung und gegebenenfalls Glas, Glaskeramik und/oder oxidkeramischem Material, in einer Menge von ca. 0,5 bis 10 mg, vorzugsweise 1 bis 4 mg, pro m² Partikeloberfläche enthalten ist.

22. Modellmaterial nach einem der vorhergehenden Ansprüche, **dadurch gekennzeichnet, daß** die lineare Expandierbarkeit des Materials zwischen 3 und 50 %, vorzugsweise zwischen 5 und 30 %, insbesondere zwischen 10 und 25 %, beträgt.

23. Modellmaterial nach einem der vorhergehenden Ansprüche, **dadurch gekennzeichnet, daß** es in Form von Granalien, vorzugsweise in Form von weitgehend tropfenförmigen Granalien, vorliegt.

24. Modellmaterial nach Anspruch 23, **dadurch gekennzeichnet, daß** der Durchmesser der Granalien zwischen 2 und 20 mm, vorzugsweise zwischen 5 und 15 mm, beträgt.

25. Modellmaterial nach einem der vorhergehenden Ansprüche, **dadurch gekennzeichnet, daß** es in erstarrtem Zustand in lagerfähiger Form vorliegt, insbesondere in einer luftdicht verschließbaren Verpackung.

26. Verfahren zur Herstellung des Modellmaterials nach einem der vorhergehenden Ansprüche, **dadurch gekennzeichnet, daß** eine erste Komponente aus mindestens einem Metall und/oder mindestens einer Metallverbindung, welche durch chemische Reaktion miteinander und/oder mit mindestens einem weiteren Reaktionspartner unter Volumenvergrößerung umsetzbar sind, gegebenenfalls nach Zumischung mindestens einer Glaskeramik, eines Glases und/oder eines oxidkeramischen Materials, mit einer zweiten Komponente aus mindestens einem Wachs, gegebenenfalls nach Zumischung mindestens eines Additivs, dispergiert wird.

27. Verwendung des Modellmaterials nach einem der Ansprüche 1 bis 25 zur Herstellung vorzugsweise vollkeramischer Dentalformteile, wobei der Sinterschrumpf, der beim Sintern eines auf einem Arbeitsmodell gebildeten keramischen Grünkörpers eintritt, durch die Expansion des Modellmaterials bei der Herstellung des Arbeitsmodells mindestens teilweise, vorzugsweise vollständig, kompensiert wird.

28. Verfahren zur Herstellung eines zahntechnischen Modells, insbesondere eines sogenannten Arbeitsmodells, **dadurch gekennzeichnet, daß** das Modellmaterial nach einem der Ansprüche 1 bis 25 in eine Negativform einer Zahnpräparation oder eines prothetischen Aufbauteils eingebracht wird und eine chemische Reaktion unter Volumenvergrößerung des Materials initiiert und durchgeführt wird.

29. Verfahren nach Anspruch 28, **dadurch gekennzeichnet, daß** es sich bei der Reaktion um eine Oxidation handelt, vorzugsweise um eine Oxidation mit Sauerstoff, insbesondere Luftsauerstoff, als Reaktionspartner.

30. Verfahren nach Anspruch 28 oder Anspruch 29, **dadurch gekennzeichnet, daß** die Reaktion durch eine thermische Behandlung initiiert und durchgeführt wird, wobei vorzugsweise die thermische Behandlung bei Temperaturen zwischen 200°C und 1.250°C erfolgt.
